# EUROPEAN PATENT APPLICATION

(11) **EP 4 167 077 A1**
(43) Date of publication of application: **19.04.2023**
(21) Application number: 22187483.7
(22) Date of filing: 28.07.2022
(51) Int. Cl.: G06F 8/30, G06F 16/35

(54) **COMPUTER-READABLE RECORDING MEDIUM STORING INFORMATION PROCESSING PROGRAM, INFORMATION PROCESSING METHOD, AND INFORMATION PROCESSING DEVICE**

(30) Priority: 15.09.2021 JP 2021150598
(71) Applicant: FUJITSU LIMITED, Kawasaki-shi, Kanagawa 211-8588 (JP)
(72) Inventor: Ura, Akira, Kawasaki-shi, Kanagawa, 211-8588 (JP); Mizobuchi, Yuji, Kawasaki-shi, Kanagawa, 211-8588 (JP)
(74) Representative: Hoffmann Eitle

(57) **Abstract**

An information processing program including instructions which, when executed by a computer, cause the computer to execute processing, the processing including: acquiring features that represent contents of each of programs of a program group related to a certain field; acquiring a performance value that represents performance of each of the programs; classifying the program group into a plurality of clusters on the basis of the acquired features; selecting, from each cluster of the plurality of clusters, one or more of programs that have relatively great acquired performance values; and outputting the one or more of selected programs.

## Description

### FIELD

The embodiment discussed herein is related to an information processing program, an information processing method, and an information processing device.

### BACKGROUND

Conventionally, there is a technology for generating, by using a model, a program that analyzes data. For example, a model that generates a new program capable of analyzing data related to a target field when data features related to the target field are input is trained on the basis of a plurality of sample programs. Then, by using the trained model, the new program capable of analyzing the data related to the target field is generated on the basis of the data features related to the target field.

As a related art, for example, there is a technology for setting a program created by an analyst as a sample program and training a model that generates a new program that analyzes data related to a target field.

Cambronero, Jose' P., and Martin C. Rinard. "AL: autogenerating supervised learning programs." Proceedings of the ACM on Programming Languages 3. OOPSLA (2019): 1-28 is disclosed as related art.

### SUMMARY

### TECHNICAL PROBLEM

However, in the prior art, it is difficult to train a model capable of generating a new program that accurately analyzes data related to a target field. For example, since it is difficult to prepare a plurality of programs that is suitable samples for training a model, it is not possible to train a model capable of generating a new program that accurately analyzes data related to a target field.

In one aspect, an embodiment aims to output sample programs suitable for training a model.

### SOLUTION TO PROBLEM

According to an aspect of the embodiments, there is provided an information processing program including instructions which, when executed by a computer, cause the computer to execute processing. In an example, the processing includes: acquiring features that represent contents of each of programs of a program group related to a certain field; acquiring a performance value that represents performance of each of the programs; classifying the program group into a plurality of clusters on the basis of the acquired features; selecting, from each cluster of the plurality of clusters, one or more of programs that have relatively great acquired performance values; and outputting the one or more of selected programs.

### ADVANTAGEOUS EFFECTS OF INVENTION

According to one aspect, it is possible to output sample programs suitable for training a model.

### BRIEF DESCRIPTION OF DRAWINGS

FIG. 1 is an explanatory diagram illustrating one example of an information processing method according to an embodiment;
FIG. 2 is an explanatory diagram illustrating one example of a program generation system 200;
FIG. 3 is an explanatory diagram illustrating a use example of the program generation system 200;
FIG. 4 is a block diagram illustrating a hardware configuration example of an information processing device 100;
FIG. 5 is a block diagram illustrating a functional configuration example of the information processing device 100;
FIG. 6 is an explanatory diagram (part 1) illustrating an operation example of the information processing device 100;
FIG. 7 is an explanatory diagram (part 2) illustrating the operation example of the information processing device 100;
FIG. 8 is an explanatory diagram (part 3) illustrating the operation example of the information processing device 100;
FIG. 9 is an explanatory diagram (part 4) illustrating the operation example of the information processing device 100;
FIG. 10 is an explanatory diagram illustrating one example of selection processing;
FIG. 11 is an explanatory diagram illustrating another example of the selection processing;
FIG. 12 is a flowchart illustrating one example of a first overall processing procedure;
FIG. 13 is a flowchart illustrating one example of a selection processing procedure; and
FIG. 14 is a flowchart illustrating one example of a second overall processing procedure.

### DESCRIPTION OF EMBODIMENTS

Hereinafter, an embodiment of an information processing program, an information processing method, and an information processing device will be described in detail with reference to the drawings.

(One Example of Information Processing Method According to Embodiment)

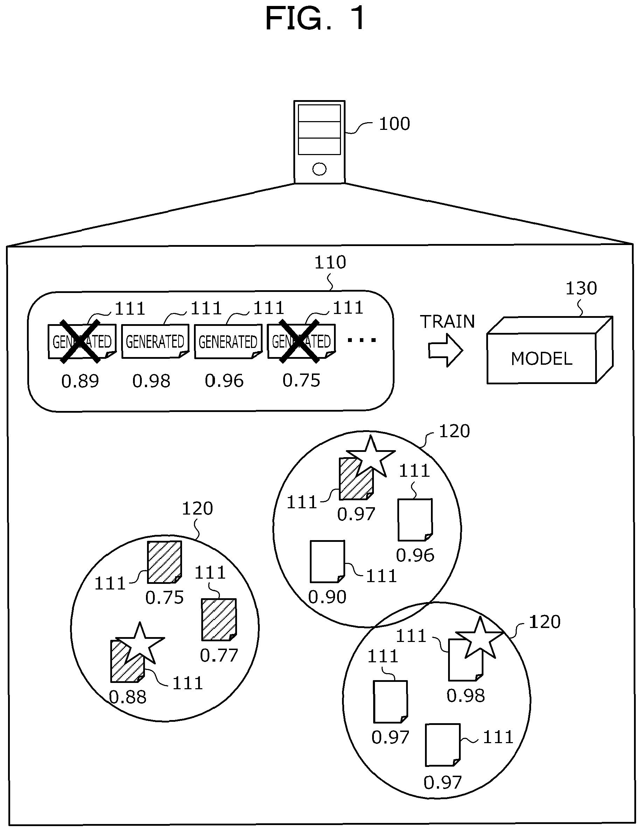

FIG. 1 is an explanatory diagram illustrating one example of the information processing method according to the embodiment. An information processing device 100 is a computer that outputs sample programs suitable for training a model. The information processing device 100 is, for example, a server or a personal computer (PC).

The program is formed by, for example, a combination of components such as functions or classes. The model is, for example, a model capable of generating a new program capable of analyzing data to be analyzed related to a target field. The model generates the new program when, for example, data features (may be referred to as "feature quantity") related to the target field are input. The model is, for example, the program. The model may be, for example, a neural network, a tree, or a mathematical expression. The field is, for example, a category related to medical care, finance, or management. The model is trained on the basis of, for example, a plurality of sample programs. Here, it is desirable to train the model capable of generating the new program that accurately analyzes the data to be analyzed related to the target field.

However, it is difficult to train the model capable of generating the new program that accurately analyzes the data to be analyzed related to the target field. For example, since it is difficult to prepare a plurality of programs that is suitable samples for training the model, it is not possible to train the model capable of generating the new program that accurately analyzes the data related to the target field.

For example, a first method is conceivable in which programs created by an analyst are set as the sample programs. In this first method, there is a case where it is not possible to train the model capable of generating the new program that accurately analyzes the data related to the target field unless the analyst creates a huge number of programs. This first method causes an increase in a workload on the analyst. This first method causes an increase in a work time needed for training the model. In this first method, the model is trained without considering performance of the program, and there is a case where it is not possible to train the model capable of generating the new program that accurately analyzes the data related to the target field. For this first method, for example, Cambronero, Jose' P., and Martin C. Rinard. "AL: autogenerating supervised learning programs." Proceedings of the ACM on Programming Languages 3. OOPSLA (2019): 1-28 described above may be referred to.

Furthermore, for example, a second method is conceivable in which a large number of programs are created by comprehensively combining components such as functions or classes, and sample programs are selected and set from the large number of created programs. In this second method, there is a case where there is no program that reflects intention of an analyst, and it is not possible to train the model capable of generating the new program that accurately analyzes the data related to the target field. This second method causes the increase in the work time needed for training the model. For this second method, for example, Reference Document 1 described below may be referred to.

Reference Document 1: Feurer, Matthias, et al. "Efficient and Robust Automated Machine Learning, 2015." <URL http://papers. nips. cc/paper/5872-efficient-and-robust-automated-machine-learning.>

Furthermore, in this second method, a case is conceivable where programs having relatively large performance values are selected and set as the sample programs from the large number of created programs. Even in this case, it may not be possible to train the model capable of generating the new program that accurately analyzes the data related to the target field. For example, programs having similar contents may be selected as the sample programs, and it may not be possible to train the model capable of generating the new program that accurately analyzes the data related to the target field due to overtraining.

Therefore, in the present embodiment, the information processing method will be described which may output sample programs that are suitable for training the model and may enable training of the model capable of generating the new program that accurately analyzes the data to be analyzed related to the target field.

In FIG. 1, the information processing device 100 acquires a program group 110 related to a first field. The first field is, for example, a field related to medical care and predicting whether or not a patient will have a first disease in the future on the basis of attribute information of the patient. The first field may be, for example, a field related to management and predicting a daily sales amount of a convenience store on the basis of attribute information of the convenience store of a first company.

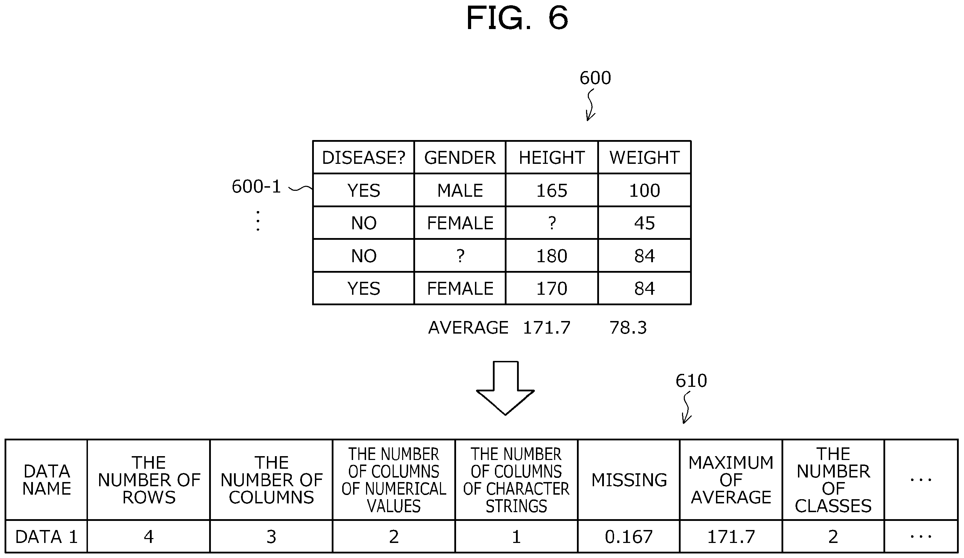

The program group 110 preferably includes, for example, a program 111 created by a user and a program 111 generated by a predetermined model on the basis of the program 111 created by the user. One example of generating the new program 111 by the predetermined model on the basis of the program 111 created by the user will be described later with reference to FIGs. 6 to 11.

(1-1) The information processing device 100 acquires features(may be referred to as "feature quantity") representing contents of each program 111 of the program group 110 related to the first field. The features include, for example, a value indicating a component such as a function or a class forming the program 111. The features may include, for example, a value indicating a hyperparameter of the component.

(1-2) The information processing device 100 acquires a performance value representing performance of each program 111. The performance corresponds to, for example, how accurately data to be analyzed related to the first field may be analyzed. For example, the higher the accuracy of the analysis, the greater the performance value. It is indicated that, for example, the greater the performance value, the better the performance.

(1-3) The information processing device 100 classifies the program group 110 into a plurality of clusters 120 on the basis of the acquired features. The information processing device 100 classifies the program group 110 into the plurality of clusters 120 so that, for example, the programs 111 having similar feature quantities are classified into the same cluster. Examples of a classification method include a k-means method.

(1-4) The information processing device 100 selects a predetermined number of programs 111 (may be referred to as "one or more of programs") having a relatively great acquired performance value from each cluster 120 of the plurality of clusters 120. The predetermined number is set in advance by the user, for example. In the example of FIG. 1, the predetermined number is 1, for example. The information processing device 100 selects the program 111 having the greatest performance value from each of the clusters 120. In the example of FIG. 1, the programs 111 having the greatest performance values are indicated by adding star marks.

(1-5) The information processing device 100 outputs the predetermined number of selected programs 111. For example, the information processing device 100 transmits the selected programs 111 as sample programs 111 related to the first field to a training unit that trains a model 130 capable of generating a new program capable of analyzing data to be analyzed related to a target field. The training unit is included in, for example, the information processing device 100. The training unit may be included in, for example, another computer different from the information processing device 100.

The target field is, for example, a field different from the first field. The target field is, for example, a field related to medical care and predicting whether or not a patient will have a second disease in the future on the basis of attribute information of the patient. The target field may be, for example, a field related to management and predicting a daily sales amount of a convenience store on the basis of attribute information of the convenience store of a second company.

With this configuration, the information processing device 100 may output the sample programs 111 related to the first field, which are suitable for training the model 130. Thus, for example, the information processing device 100 may facilitate training of the model 130 capable of generating the new program capable of accurately analyzing the data to be analyzed related to the target field by the training unit.

For example, the information processing device 100 may select the plurality of programs 111 each of which has different contents, and output the programs 111 as the sample programs 111 related to the first field. For example, the information processing device 100 may select the plurality of programs 111 each of which is formed by combining different components, and output the programs 111 as the sample programs 111 related to the first field. Thus, for example, the information processing device 100 may prevent from selecting only the plurality of programs 111 each of which has similar contents, and may avoid overtraining. Therefore, for example, the information processing device 100 may facilitate training of the model 130 capable of generating the new program capable of accurately analyzing the data to be analyzed related to the target field.

The information processing device 100 may select and output the sample programs 111 related to the first field in consideration of, for example, the performance value of each program 111. Thus, for example, the information processing device 100 may facilitate training of the model 130 capable of generating the new program capable of accurately analyzing the data to be analyzed related to the target field.

The information processing device 100 may acquire the program group 110 including the program 111 generated by the predetermined model on the basis of the program 111 created by the user. Thus, the information processing device 100 allows the user to dispense with the need to create a huge number of the programs 111, thereby suppressing an increase in a workload on the user.

Furthermore, the information processing device 100 may train the model 130 capable of generating the new program that accurately analyzes the data related to the target field in consideration of the program 111 that reflects intention of the user. Furthermore, the information processing device 100 may suppress an increase in a work time needed for training the model 130.

Here, the case has been described where the information processing device 100 selects and outputs the sample programs 111 related to the first field from the program group 110 related to the first field, but the present embodiment is not limited to this. For example, there may be a case where the information processing device 100 further selects and outputs, from a program group related to another field different from the first field, sample programs related to the another field.

Here, the case has been described where the program group 110 includes the program 111 created by the user and the program 111 generated by the predetermined model on the basis of the program 111 created by the user, but the present embodiment is not limited to this. For example, there may be a case where the program group 110 does not include the program 111 created by the user, but includes only the program 111 generated by machine learning. For example, there may be a case where the program group 110 includes only the program 111 created by the user.

Here, the case has been described where the output format is transmission to the training unit that trains the model 130 capable of generating the new program capable of analyzing the data to be analyzed related to the target field, but the present embodiment is not limited to this. For example, there may be a case where the output format is display on a display, print output to a printer, transmission to an external device by a network interface (I/F), storage to a storage area such as a memory and a recording medium, or the like.

Here, the case has been described where the performance corresponds to how accurately the data to be analyzed may be analyzed, but the present embodiment is not limited to this. For example, there may be a case where the performance is a processing speed of the program 111. In this case, for example, the higher the processing speed, the greater the performance value. It is indicated that, for example, the greater the performance value, the higher the processing speed.

### (One Example of Program Generation System 200)

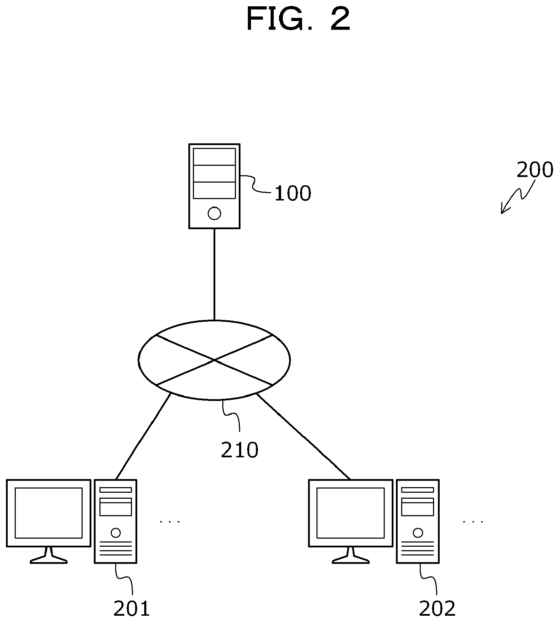

Next, one example of a program generation system 200 to which the information processing device 100 illustrated in FIG. 1 is applied will be described with reference to FIG. 2.

FIG. 2 is an explanatory diagram illustrating the one example of the program generation system 200. In FIG. 2, the program generation system 200 includes the information processing device 100, a providing side device 201, and a client device 202.

In the program generation system 200, the information processing device 100 and the providing side device 201 are connected via a wired or wireless network 210. The network 210 is, for example, a local area network (LAN), a wide area network (WAN), or the Internet.

Furthermore, in the program generation system 200, the information processing device 100 and the client device 202 are connected via the wired or wireless network 210.

The information processing device 100 receives, for each field of a plurality of fields, a first program related to the field, which is created by a developer, and data features related to the field, from the providing side device 201. The data features are data related to any field and including field features representing properties or the like of a data group to be analyzed related to the field. One example of the data group to be analyzed will be described later with reference to FIG. 6, for example. One example of the data features will be described later with reference to FIG. 6, for example.

The information processing device 100 trains, on the basis of the received first program, a first model that enables generation of a new program related to each field of the plurality of fields. The information processing device 100 generates, for each field of the plurality of fields, a second program related to the field by using the trained first model on the basis of data features related to the field. The information processing device 100 sets, for each field of the plurality of fields, a program group including the received first program and the generated second program.

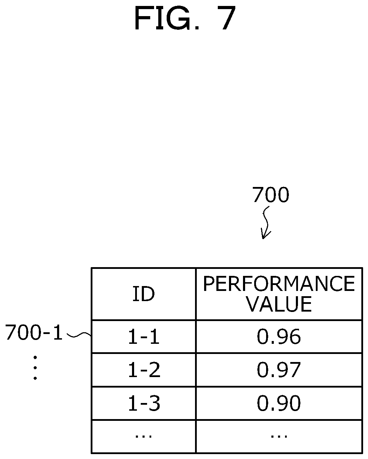

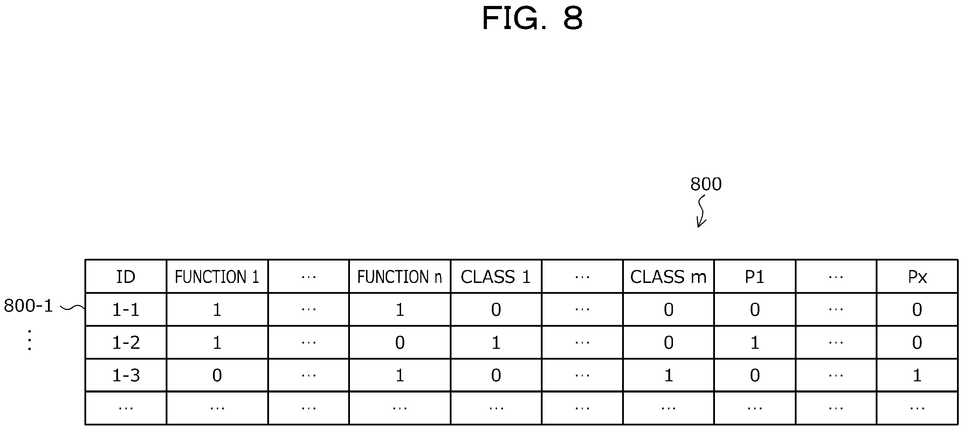

The information processing device 100 acquires, for each field of the plurality of fields, features representing contents of each program of the set program group and a performance value representing performance of each program of the set program group. The features include, for example, a value indicating a component such as a function or a class forming the program. The features may include, for example, a value indicating a hyperparameter of the component. The performance corresponds to, for example, how accurately data to be analyzed related to any field may be analyzed. For example, the higher the accuracy of the analysis, the greater the performance value. It is indicated that, for example, the greater the performance value, the better the performance. One example of the features will be described later with reference to FIG. 8, for example. One example of the performance value will be described later with reference to FIG. 7, for example.

The information processing device 100 classifies, for each field of the plurality of fields, the set program group into a plurality of clusters on the basis of the acquired features. The information processing device 100 selects, for each field of the plurality of fields, a predetermined number of programs from each cluster of the plurality of clusters. The information processing device 100 trains, on the basis of the predetermined number of selected programs, a second model that generates a new program capable of analyzing data to be analyzed related to the target field according to data features related to the target field.

The information processing device 100 receives the data features related to the target field from the client device 202. The information processing device 100 generates, by using the trained second model, a third program capable of analyzing data to be analyzed related to the target field on the basis of the received data features related to the target field. The information processing device 100 transmits the generated third program to the client device 202. The information processing device 100 is, for example, a server or a PC.

The providing side device 201 is a computer that transmits a program related to any field to the information processing device 100. The providing side device 201 is used by, for example, a developer who creates the program. The providing side device 201 has data features related to any field. The providing side device 201 generates the program related to any field on the basis of operation input of the developer. The providing side device 201 transmits the generated program related to any field to the information processing device 100. The providing side device 201 transmits the data features related to any field to the information processing device 100. The providing side device 201 is, for example, a PC or a tablet terminal.

The client device 202 is a computer that transmits data features related to a target field to the information processing device 100. The client device 202 transmits the data features related to the target field to the information processing device 100 on the basis of, for example, operation input of a user. The client device 202 receives, from the information processing device 100, a program capable of accurately analyzing data to be analyzed related to the target field. The client device 202 is, for example, a PC or a tablet terminal.

Here, the case has been described where the information processing device 100 and the providing side device 201 are different devices, but the present embodiment is not limited to this. For example, there may be a case where the information processing device 100 has a function as the providing side device 201, and also operates as the providing side device 201.

Furthermore, here, the case has been described where the information processing device 100 and the client device 202 are different devices, but the present embodiment is not limited to this. For example, there may be a case where the information processing device 100 has a function as the client device 202, and also operates as the client device 202.

### (Use Example of Program Generation System 200)

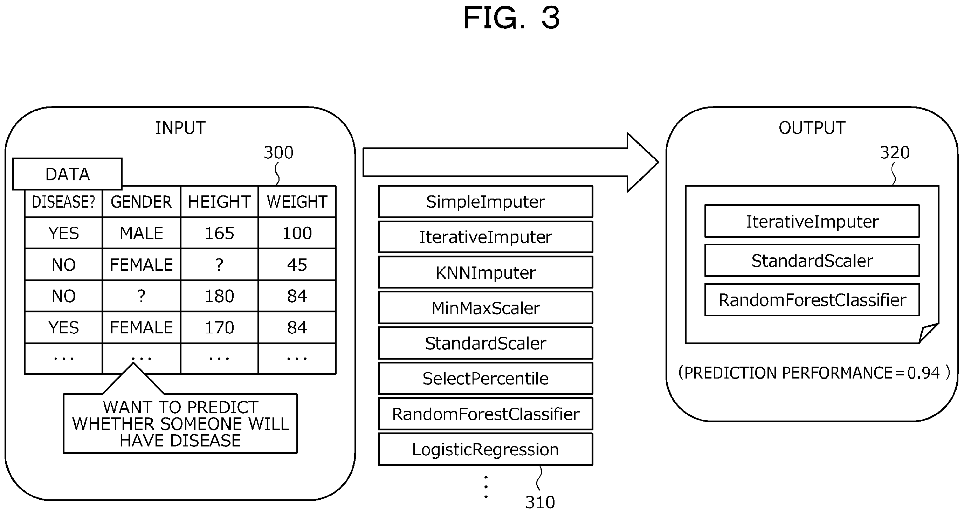

Next, a use example of the program generation system 200 will be described with reference to FIG. 3.

FIG. 3 is an explanatory diagram illustrating the use example of the program generation system 200. As illustrated in FIG. 3, the program generation system 200 is used in, for example, a medical field. The program generation system 200 is used in a case where, for example, a user wishes to analyze whether or not a patient will have a specific disease in the future on the basis of data to be analyzed of the patient related to the specific disease.

In this case, for example, by using the trained second model, the information processing device 100 generates a program 320 that combines components included in a component group 310 on the basis of data features obtained from a data group to be analyzed 300 of the patient related to the specific disease. With this configuration, the information processing device 100 may output the program 320 capable of accurately analyzing whether or not the patient will have the specific disease in the future on the basis of the data to be analyzed of the patient related to the specific disease, so that the user may refer to the program 320.

Here, the case has been described where the user wishes to analyze whether or not the patient will have the specific disease in the future on the basis of the data to be analyzed of the patient related to the specific disease, but the present embodiment is not limited to this. For example, there may be a case where the user wishes to predict a daily sales amount of a convenience store one month later on the basis of attribute information of the convenience store. In this case, the program generation system 200 may be used. In this case, for example, by using the trained second model, the information processing device 100 generates a program that combines components included in the component group 310 on the basis of data features obtained from an attribute information group of the convenience store. With this configuration, the information processing device 100 may output the program capable of accurately predicting the daily sales amount of the convenience store one month later, so that the user may refer to the program.

Furthermore, for example, there may be a case where the user wishes to analyze creditworthiness of a customer on the basis of attribute information of the customer and determine whether or not to issue a credit card. In this case, the program generation system 200 may be used. In this case, for example, by using the trained second model, the information processing device 100 generates a program that combines components included in the component group 310 on the basis of data features obtained from an attribute information group of the customer. With this configuration, the information processing device 100 may output the program capable of accurately determining whether or not to issue the credit card, so that the user may refer to the program.

### (Hardware Configuration Example of Information Processing Device 100)

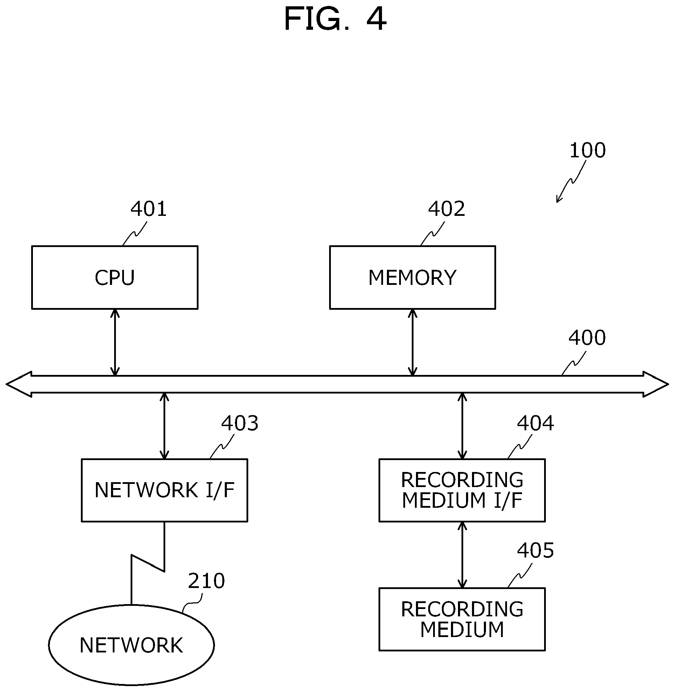

Next, a hardware configuration example of the information processing device 100 will be described with reference to FIG. 4.

FIG. 4 is a block diagram illustrating the hardware configuration example of the information processing device 100. In FIG. 4, the information processing device 100 includes a central processing unit (CPU) 401, a memory 402, a network interface (I/F) 403, a recording medium I/F 404, and a recording medium 405. Furthermore, the individual components are connected to each other by a bus 400.

Here, the CPU 401 is in charge of overall control of the information processing device 100. The memory 402 includes, for example, a read only memory (ROM), a random access memory (RAM), and a flash ROM. For example, the flash ROM or the ROM stores various programs, while the RAM is used as a work area for the CPU 401. The programs stored in the memory 402 are loaded into the CPU 401 to cause the CPU 401 to execute coded processing.

The network I/F 403 is connected to the network 210 through a communication line, and is connected to another computer via the network 210. Then, the network I/F 403 manages an interface between the network 210 and an inside, and controls input and output of data to and from another computer. The network I/F 403 is, for example, a modem or a LAN adapter.

The recording medium I/F 404 controls reading and writing of data from and to the recording medium 405 under the control of the CPU 401. The recording medium I/F 404 is, for example, a disk drive, a solid state drive (SSD), or a universal serial bus (USB) port. The recording medium 405 is a nonvolatile memory that stores data written under the control of the recording medium I/F 404. The recording medium 405 is, for example, a disk, a semiconductor memory, or a USB memory. The recording medium 405 may be attachable to and detachable from the information processing device 100.

The information processing device 100 may include, for example, a keyboard, a mouse, a display, a printer, a scanner, a microphone, or a speaker, in addition to the components described above. Furthermore, the information processing device 100 may include a plurality of the recording medium I/Fs 404 and the recording media 405. Furthermore, the information processing device 100 does not have to include the recording medium I/F 404 or the recording medium 405.

### (Hardware Configuration Example of Providing Side Device 201)

Since a hardware configuration example of the providing side device 201 is similar to the hardware configuration example of the information processing device 100 illustrated in FIG. 4, for example, description thereof will be omitted.

### (Hardware Configuration Example of Client Device 202)

Since a hardware configuration example of the client device 202 is similar to the hardware configuration example of the information processing device 100 illustrated in FIG. 4, for example, description thereof will be omitted.

### (Functional Configuration Example of Information Processing Device 100)

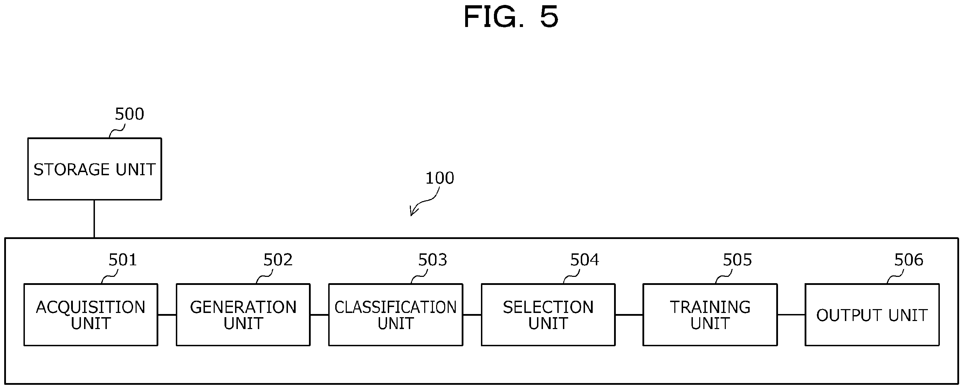

Next, a functional configuration example of the information processing device 100 will be described with reference to FIG. 5.

FIG. 5 is a block diagram illustrating the functional configuration example of the information processing device 100. The information processing device 100 includes a storage unit 500, an acquisition unit 501, a generation unit 502, a classification unit 503, a selection unit 504, a training unit 505, and an output unit 506.

The storage unit 500 is implemented by, for example, a storage area such as the memory 402 or the recording medium 405 illustrated in FIG. 4. Hereinafter, a case will be described where the storage unit 500 is included in the information processing device 100, but the present embodiment is not limited to this. For example, there may be a case where the storage unit 500 is included in a device different from the information processing device 100, and the information processing device 100 is allowed to refer to stored contents of the storage unit 500.

The acquisition unit 501 to the output unit 506 function as one example of a control unit. For example, the acquisition unit 501 to the output unit 506 implement functions thereof by causing the CPU 401 to execute a program stored in the storage area such as the memory 402 or the recording medium 405 or by the network I/F 403 illustrated in FIG. 4. A processing result of each functional unit is stored in, for example, the storage area such as the memory 402 or the recording medium 405 illustrated in FIG. 4.

The storage unit 500 stores various types of information referred to or updated in the processing of each functional unit. The storage unit 500 stores a program group related to a certain field. The program group is a set of programs that may be used as samples when a model is trained. The program is formed by, for example, combining components such as functions or classes and setting hyperparameters of the components. The field is, for example, a category related to medical care, finance, or management. The model has, for example, a function that enables generation of a new program capable of analyzing data to be analyzed. The model is, for example, the program. The model may be, for example, a neural network, a tree, or a mathematical expression.

The storage unit 500 stores, for example, a program group related to each field of a plurality of fields different from each other. The program group is, for example, acquired by the acquisition unit 501 and stored by the storage unit 500. The program group may be, for example, generated by the generation unit 502 and stored by the storage unit 500. The program group related to the certain field may include, for example, the first program related to the field, which is acquired by the acquisition unit 501, and the second program related to the field, which is generated by the generation unit 502. The program group related to the certain field does not have to include, for example, the first program related to the field. The program group related to the certain field does not have to include, for example, the second program related to the field.

The storage unit 500 stores the first model. The first model has a function that enables generation of a new program related to the first field according to data features related to the first field among the plurality of fields. The program has a function that enables analysis of data to be analyzed related to the first field. The data features related to the first field are data including field features representing properties or the like of a data group to be analyzed related to the first field. The data to be analyzed is data including attribute information related to any element of a plurality of elements related to the first field. The element is, for example, a person or a thing. One example of the data to be analyzed will be described later with reference to FIG. 6, for example. One example of the data features will be described later with reference to FIG. 6, for example. The first model is, for example, trained by the generation unit 502 and stored by the storage unit 500. The first model may be, for example, acquired by the acquisition unit 501 and stored by the storage unit 500.

The storage unit 500 stores the second model. The second model has a function that enables generation of a program related to a target field according to data features related to the target field. The program has a function that enables analysis of data to be analyzed related to the target field. The data features related to the target field are data including field features representing properties or the like of a data group to be analyzed related to the target field. The data to be analyzed is data including attribute information related to any element of a plurality of elements related to the target field. The element is, for example, a person or a thing. One example of the data to be analyzed will be described later with reference to FIG. 6, for example. One example of the data features will be described later with reference to FIG. 6, for example. The second model is, for example, trained by the training unit 505 and stored by the storage unit 500.

The storage unit 500 stores features representing contents of each program of the program group related to the first field. The features include, for example, a value indicating a component such as a function or a class forming the program 111. The features may include, for example, a value indicating a hyperparameter of the component. The storage unit 500 stores, for example, features representing contents of each program of the program group related to each field of the plurality of fields. The storage unit 500 stores, for example, a feature management table 800 that will be described later with reference to FIG. 8. The features are, for example, acquired by the acquisition unit 501 and stored by the storage unit 500.

The storage unit 500 stores a performance value representing performance of each program of the program group related to the first field. The performance corresponds to, for example, how accurately data to be analyzed related to the first field may be analyzed. For example, the higher the accuracy of the analysis, the greater the performance value. It is indicated that, for example, the greater the performance value, the better the performance. The storage unit 500 stores, for example, a performance value representing performance of each program of the program group related to each field of the plurality of fields. The storage unit 500 stores, for example, a performance value management table 700 that will be described later with reference to FIG. 7. The performance value is, for example, acquired by the acquisition unit 501 and stored by the storage unit 500.

The acquisition unit 501 acquires various types of information to be used for the processing of each functional unit. The acquisition unit 501 stores the acquired various types of information in the storage unit 500 or outputs the acquired various types of information to each functional unit. Furthermore, the acquisition unit 501 may output the various types of information stored in the storage unit 500 to each functional unit. The acquisition unit 501 acquires the various types of information on the basis of, for example, operation input of a user. The acquisition unit 501 may receive the various types of information from, for example, a device different from the information processing device 100.

The acquisition unit 501 acquires the first program related to the first field. The acquisition unit 501 acquires, for example, the first program related to each field of the plurality of fields. The acquisition unit 501 acquires the first program related to each field of the plurality of fields on the basis of, for example, operation input of a user. The acquisition unit 501 may acquire the first program related to each field of the plurality of fields by, for example, receiving the first program from another computer. The another computer is, for example, the providing side device 201. The acquisition unit 501 includes the acquired first program related to the first field in the program group related to the first field.

The acquisition unit 501 may acquire the program group related to the first field. The acquisition unit 501 may acquire, for example, the program group related to each field of the plurality of fields. The acquisition unit 501 may acquire the program group related to each field of the plurality of fields on the basis of, for example, operation input of a user. The acquisition unit 501 may acquire the program group related to each field of the plurality of fields by, for example, receiving the program group from another computer. The another computer is, for example, the providing side device 201.

The acquisition unit 501 acquires features representing contents of each program of the program group related to the first field. The acquisition unit 501 acquires, for example, features representing contents of each program of the program group related to each field of the plurality of fields. The acquisition unit 501 acquires the features representing the contents of each program of the program group related to each field of the plurality of fields by, for example, analyzing the contents. The acquisition unit 501 acquires the features representing the contents of each program of the program group related to each field of the plurality of fields by, for example, analyzing what kind of components such as functions or classes are included in the program. The acquisition unit 501 may acquire the features representing the contents of each program of the program group related to each field of the plurality of fields by, for example, receiving the features from another computer. The another computer is, for example, the providing side device 201.

The acquisition unit 501 acquires a performance value representing performance of each program of the program group related to the first field. The acquisition unit 501 acquires, for example, a performance value representing performance of each program of the program group related to each field of the plurality of fields. The acquisition unit 501 acquires the performance value representing the performance of each program of the program group related to each field of the plurality of fields by, for example, analyzing the performance. The acquisition unit 501 acquires the performance value representing the performance of each program of the program group related to each field of the plurality of fields by, for example, analyzing a plurality of pieces of data to be analyzed for testing by using the program. The acquisition unit 501 may acquire the performance value representing the performance of each program of the program group related to each field of the plurality of fields by, for example, receiving the performance value from another computer. The another computer is, for example, the providing side device 201.

The acquisition unit 501 acquires data features related to the target field. The acquisition unit 501 acquires the data features related to the target field on the basis of, for example, operation input of a user. The acquisition unit 501 may receive, for example, a request from another computer requesting that a program related to the target field be generated, including the data features related to the target field. The another computer is, for example, the client device 202.

The acquisition unit 501 may accept a start trigger to start the processing of any one of the functional units. The start trigger is, for example, predetermined operation input made by a user. The start trigger may be, for example, reception of predetermined information from another computer. The start trigger may be, for example, output of predetermined information by any one of the functional units.

The acquisition unit 501 may accept, for example, the acquisition of the first program as a start trigger to start the processing of the generation unit 502. The acquisition unit 501 may further accept, for example, the acquisition of the first program as a start trigger to start the processing of the classification unit 503 and the selection unit 504. The acquisition unit 501 may accept, for example, the acquisition of the data features related to the target field as a start trigger to start the processing of the classification unit 503 and the selection unit 504. The acquisition unit 501 may accept, for example, the acquisition of the data features related to the target field as a start trigger to start the processing of the training unit 505.

The generation unit 502 generates the second program related to the first field. The generation unit 502 includes the second program related to the first field in the program group related to the first field. The generation unit 502 trains the first model on the basis of, for example, the acquired first program related to the first field. As a training method, for example, automated machine learning (AutoML) is conceivable. The generation unit 502 generates, for example, the second program related to the first field by using the trained first model on the basis of the data features related to the first field. With this configuration, the generation unit 502 may generate the program related to the first field without creating the program related to the first field by a user, and may increase the number of programs related to the first field. Thus, the generation unit 502 may reduce a workload on the user.

The generation unit 502 trains the first model on the basis of, for example, the first program related to each field of the plurality of fields. The generation unit 502 generates, for example, the second program related to the field by using the trained first model on the basis of the data features related to each field of the plurality of field. With this configuration, the generation unit 502 may increase the number of programs related to the field without creating the program related to each field of the plurality of fields by the user. Thus, the generation unit 502 may reduce a workload on the user.

The classification unit 503 classifies the program group related to the first field into a plurality of clusters on the basis of the acquired features. The classification unit 503 classifies the program group related to the first field into the plurality of clusters so that, for example, the programs having features similar to each other are classified into the same cluster. The classification unit 503 may classify, for each field of the plurality of fields, the program group related to the field into a plurality of clusters on the basis of the acquired features. With this configuration, the classification unit 503 may generate a cluster as a guideline for selecting a plurality of programs having contents different from each other as sample programs to be used for training the second model.

The selection unit 504 selects, for the first field, a predetermined number of programs having a relatively great acquired performance value from each cluster of the plurality of clusters. For example, the selection unit 504 selects, for the first field, programs up to a predetermined number of ranks in descending order of the acquired performance values from each cluster of the plurality of clusters. The selection unit 504 may select, for each field of the plurality of fields, a predetermined number of programs having a relatively great acquired performance value from each cluster of the plurality of clusters. With this configuration, the selection unit 504 may select a plurality of programs having relatively great performance values and contents different from each other, which is suitable for training the second model.

The selection unit 504 may specify, for the first field, a predetermined number of clusters in which programs having relatively great acquired performance values are classified among the plurality of clusters. The selection unit 504 specifies, for example, a predetermined number of clusters in which a statistical value of the acquired performance value is relatively great. The statistical value is, for example, a maximum value, a minimum value, an average value, a median, or a mode. The selection unit 504 may select, for the first field, a predetermined number of programs having a relatively great acquired performance value from each cluster of the specified predetermined number of clusters.

The selection unit 504 may specify, for each field of the plurality of fields, a predetermined number of clusters in which programs having relatively great acquired performance values are classified among the plurality of clusters. The selection unit 504 may select, for each field of the plurality of fields, a predetermined number of programs having a relatively great acquired performance value from each cluster of the specified predetermined number of clusters. With this configuration, the selection unit 504 may exclude, from a processing target, a cluster in which programs with relatively small performance values are classified and which is determined to have a high probability that a program suitable for training the second model is not included. Thus, the selection unit 504 may facilitate selection of a program suitable for training the second model.

The selection unit 504 may select, for the first field, a predetermined number of programs whose acquired performance values are relatively great and equal to or greater than a first threshold from each cluster of the plurality of clusters. For example, when there is no predetermined number of programs whose acquired performance values are relatively great and equal to or greater than the first threshold in the cluster, the selection unit 504 may select less than the predetermined number of programs. The selection unit 504 may select, for each field of the plurality of fields, the predetermined number of programs whose acquired performance values are relatively great and equal to or greater than a first threshold from each cluster of the plurality of clusters. The selection unit 504 may randomly select the predetermined number of programs from the programs whose acquired performance values are equal to or greater than the first threshold in each cluster of the plurality of clusters. With this configuration, the selection unit 504 may dispense with the need to select a program whose performance value is less than the first threshold and whose probability of becoming a program suitable for training the second model is determined to be low. Thus, the selection unit 504 may facilitate selection of a program suitable for training the second model.

The selection unit 504 may select, for the first field, the predetermined number of programs having a relatively great acquired performance value from the program group. At this time, the program group preferably includes at least the second program. The selection unit 504 may select, for each field of the plurality of fields, the predetermined number of programs having a relatively great acquired performance value from the program group. With this configuration, the selection unit 504 may select a program suitable for training the second model without classifying the program group into a plurality of clusters.

The training unit 505 trains the second model on the basis of a predetermined number of selected programs. As a training method, for example, error back propagation is conceivable. With this configuration, by using the second model, the training unit 505 may enable generation of a program capable of accurately analyzing data to be analyzed related to the target field according to data features related to the target field.

The training unit 505 may generate, in response to a request requesting generation of a program related to the target field, the third program by using the trained second model on the basis of the data features related to the target field included in the request. The third program may accurately analyze the data to be analyzed related to the target field. With this configuration, the training unit 505 may enable use of the third program capable of accurately analyzing the data to be analyzed related to the target field.

The output unit 506 outputs a processing result of at least any one of the functional units. An output format is, for example, display on a display, print output to a printer, transmission to an external device by the network I/F 403, or storage in the storage area such as the memory 402 or the recording medium 405. With this configuration, the output unit 506 may allow to notify a user of the processing result of at least any one of the functional units and may improve convenience of the information processing device 100.

The output unit 506 outputs a predetermined number of selected programs for the first field. For example, the output unit 506 transmits, for the first field, the predetermined number of selected programs to another computer for training the second model. The output unit 506 may output, for each field of the plurality of fields, the predetermined number of selected programs. With this configuration, the output unit 506 may enable training of the second model that enables generation of a program capable of accurately analyzing data to be analyzed related to the target field.

The output unit 506 may output the trained second model. The output unit 506 outputs, for example, the second model so that a user may refer to the second model. With this configuration, the output unit 506 may enable use of the second model that enables generation of the program capable of accurately analyzing the data to be analyzed related to the target field. The output unit 506 may output the generated third program. The output unit 506 outputs, for example, the third program so that a user may refer to the third program. With this configuration, the output unit 506 may enable use of the third program capable of accurately analyzing the data to be analyzed related to the target field.

Here, the case has been described where the information processing device 100 includes the generation unit 502, but the present embodiment is not limited to this. For example, in a case where the acquisition unit 501 acquires the second program, the information processing device 100 does not have to include the generation unit 502.

Furthermore, here, the case has been described where the information processing device 100 includes the classification unit 503, but the present embodiment is not limited to this. For example, in a case where the selection unit 504 selects, for each field of the plurality of fields, the predetermined number of programs having a relatively great acquired performance value from the program group, the information processing device 100 does not have to include the classification unit 503.

Furthermore, here, the case has been described where the information processing device 100 includes the training unit 505, but the present embodiment is not limited to this. For example, there may be a case where the information processing device 100 does not include the training unit 505. In this case, the information processing device 100 may transmit the predetermined number of selected programs to another computer including the training unit 505.

### (Operation Example of Information Processing Device 100)

Next, an operation example of the information processing device 100 will be described with reference to FIGs. 6 to 9.

FIGs. 6 to 9 are explanatory diagrams illustrating the operation example of the information processing device 100. In FIG. 6, the information processing device 100 acquires data features related to each field of a plurality of fields. Data features related to a certain field include field features representing properties or the like appearing in a data group to be analyzed related to the field.

In the example of FIG. 6, data features 610 related to a field that analyzes whether or not a patient will have a specific disease in the future is indicated. In the example of FIG. 6, the data features 610 include field features representing properties or the like appearing in a data group to be analyzed stored in an analysis target management table 600. The analysis target management table 600 is implemented by, for example, the storage area such as the memory 402 or the recording medium 405 of the information processing device 100 illustrated in FIG. 4.

As illustrated in FIG. 6, the analysis target management table 600 has fields for disease?, gender, height, and weight. In the analysis target management table 600, a sample of data to be analyzed is stored as a record 600-a by setting information in each field for each patient in the past. The letter a is an optional integer.

In the field of the disease?, flag information indicating whether or not a patient in the past has had a specific disease is set. For example, when the flag information is YES, it indicates that the patient in the past has had the specific disease. For example, when the flag information is NO, it indicates that the patient in the past has not had the specific disease. In the field of the gender, the gender of the patient described above used as input is set. In the field of the height, the height of the patient described above used as input is set. In the field of the weight, the weight of the patient described above used as input is set.

The data features 610 have fields for a data name, the number of rows, the number of columns, the number of columns of numerical values, the number of columns of character strings, missing, a maximum of an average, and the number of classes. The data features 610 are formed by setting information in each field.

In the field of the data name, a data name that identifies the data features 610 are set. In the field of the number of rows, the number of rows in the analysis target management table 600 is set. The row corresponds to, for example, the record of the analysis target management table 600. In the field of the number of columns, the number of columns related to an input value in the analysis target management table 600 is set. The column corresponds to the field of the analysis target management table 600. In the field of the number of columns of numerical values, the number of columns for columns for which input numerical values are set among the columns of the analysis target management table 600 is set. In the field of the number of columns of character strings, the number of columns for columns for which input character strings are set among the columns of the analysis target management table 600 is set.

In the field of the missing, a ratio of a field whose value is missing among the fields in the analysis target management table 600 is set. In the field of the maximum of the average, a statistic of the whole of the analysis target management table 600 based on a statistic of each column of the analysis target management table 600 is set. The statistic is, for example, the maximum. In the field of the number of classes, the number of classes of an objective variable is set. Next, description of FIG. 7 will be made.

In FIG. 7, the information processing device 100 prepares the performance value management table 700. The performance value management table 700 is implemented by, for example, the storage area such as the memory 402 or the recording medium 405 of the information processing device 100 illustrated in FIG. 4.

As illustrated in FIG. 7, the performance value management table 700 has fields for an identification (ID) and a performance value. In the performance value management table 700, performance value data is stored as a record 700-b by setting information in each field for each program. The letter b is an optional integer.

In the field of the ID, an ID that identifies the program is set. The ID is, for example, a combination of a value that identifies a field and a value that identifies a program related to the field. In the field of the performance value, a performance value of the program described above is set. Next, description of FIG. 8 will be made.

In FIG. 8, the information processing device 100 prepares the feature management table 800. The feature management table 800 is implemented by, for example, the storage area such as the memory 402 or the recording medium 405 of the information processing device 100 illustrated in FIG. 4.

As illustrated in FIG. 8, the feature management table 800 has fields for an ID, a function i, a class j, and Pk. The letter i is, for example, 1 to n. The letter j is, for example, 1 to m. The letter k is, for example, 1 to x. In the feature management table 800, a feature group is stored as a record 800-c by setting information in each field for each program. The letter c is an optional integer.

In the field of the ID, an ID that identifies the program is set. The ID is, for example, a combination of a value that identifies a field and a value that identifies a program related to the field. In the field of the function i, flag information indicating whether or not the program described above includes the function i is set. When the flag information is 1, for example, it indicates that the program described above includes the function i. When the flag information is 0, for example, it indicates that the program described above does not include the function i.

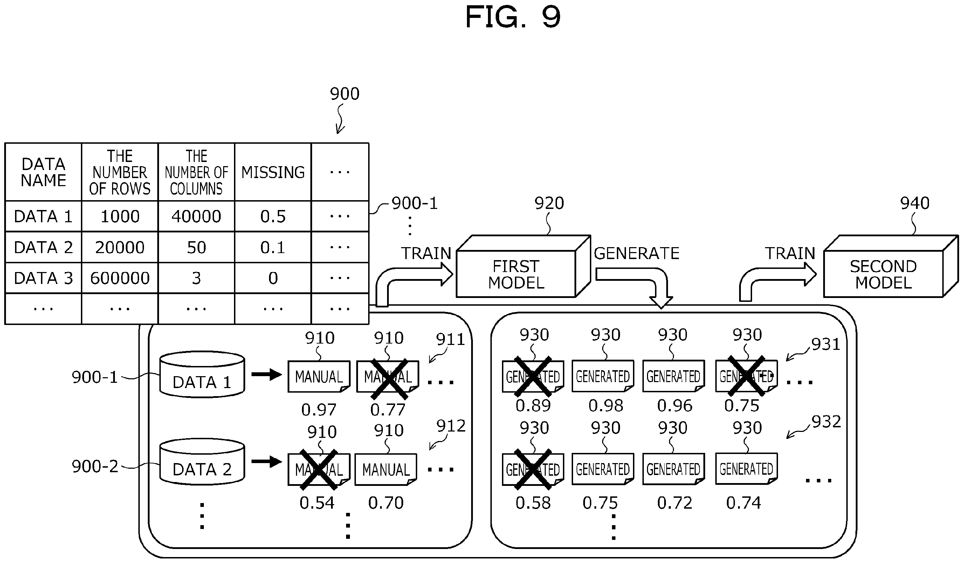

In the field of the class j, flag information indicating whether or not the program described above includes the class j is set. When the flag information is 1, for example, it indicates that the program described above includes the class j. When the flag information is 0, for example, it indicates that the program described above does not include the class j. In the field of the Pk, a value of a hyperparameter Pk set in the function i or the class j included in the program described above is set. Next, description of FIG. 9 will be made.

In FIG. 9, the information processing device 100 includes a data feature management table 900 that summarizes acquired data features related to each field of a plurality of fields. A record 900-d in the data feature management table 900 is the data features. The letter d is an optional integer.

(9-1) The information processing device 100 acquires a first program 910 corresponding to each piece of the data features. The first program 910 is, for example, manually created. In the example of FIG. 9, a value indicated below the first program 910 indicates a performance value of the first program 910.

The information processing device 100 acquires, for example, a first program group 911 including the first programs 910 corresponding to data features of a record 900-1. Similarly, the information processing device 100 acquires, for example, a first program group 912 including the first programs 910 corresponding to data features of a record 900-2. Similarly, the information processing device 100 acquires, for example, the first programs 910 corresponding to data features of the record 900-d. Here, the letter d is an integer equal to or greater than 3. The information processing device 100 trains a first model 920 on the basis of the first programs 910. The information processing device 100 trains the first model 920 by, for example, AutoML.

(9-2) The information processing device 100 generates, by using the first model 920, a second program 930 corresponding to each piece of the data features. In the example of FIG. 9, a value indicated below the second program 930 indicates a performance value of the second program 930.

The information processing device 100 generates, for example, a second program group 931 including the second programs 930 by using the first model 920 on the basis of the data features of the record 900-1. Similarly, the information processing device 100 generates, for example, a second program group 932 including the second programs 930 by using the first model 920 on the basis of the data features of the record 900-2. Similarly, the information processing device 100 generates, for example, the second programs 930 by using the first model 920 on the basis of the data features of the record 900-d. Here, the letter d is an integer equal to or greater than 3.

The information processing device 100 sets a program group corresponding to each piece of the data features. The program group corresponding to each piece of the data features includes, for example, the first programs 910 corresponding to the data features and the second programs 930 corresponding to the data features. The information processing device 100 analyzes each program included in the set program group corresponding to each piece of the data features, sets a performance value of the program in the performance value management table 700, and sets the features of the program in the feature management table 800.

(9-3) The information processing device 100 executes selection processing and selects at least any one program from the program group corresponding to each piece of the data features. The information processing device 100 executes the selection processing and selects at least any one program from the program group corresponding to each piece of the data features with reference to, for example, the performance value management table 700 and the feature management table 800. In the example of FIG. 9, for example, the first programs 910 not selected and the second programs 930 not selected are indicated by adding cross marks.

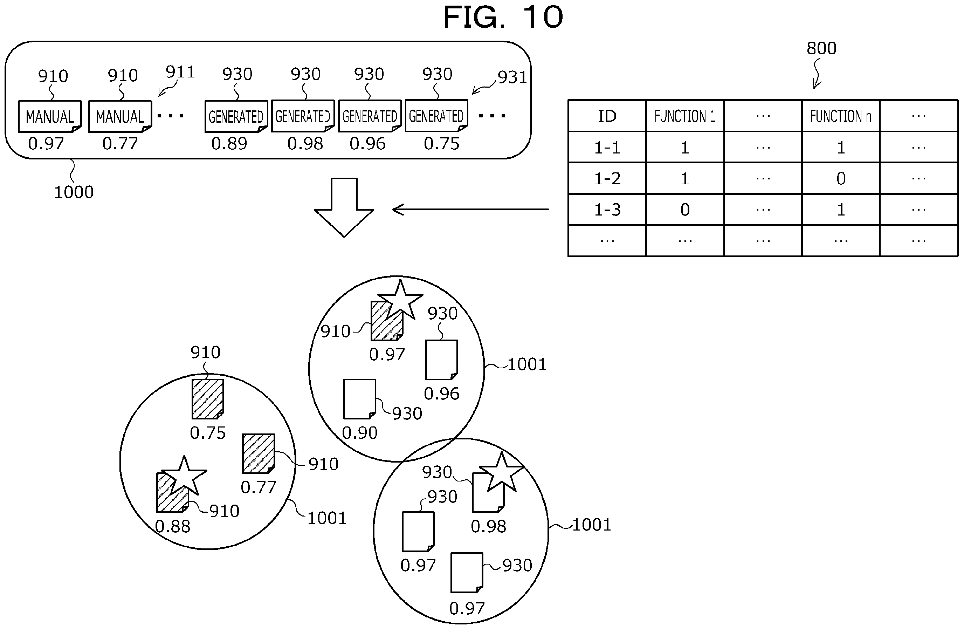

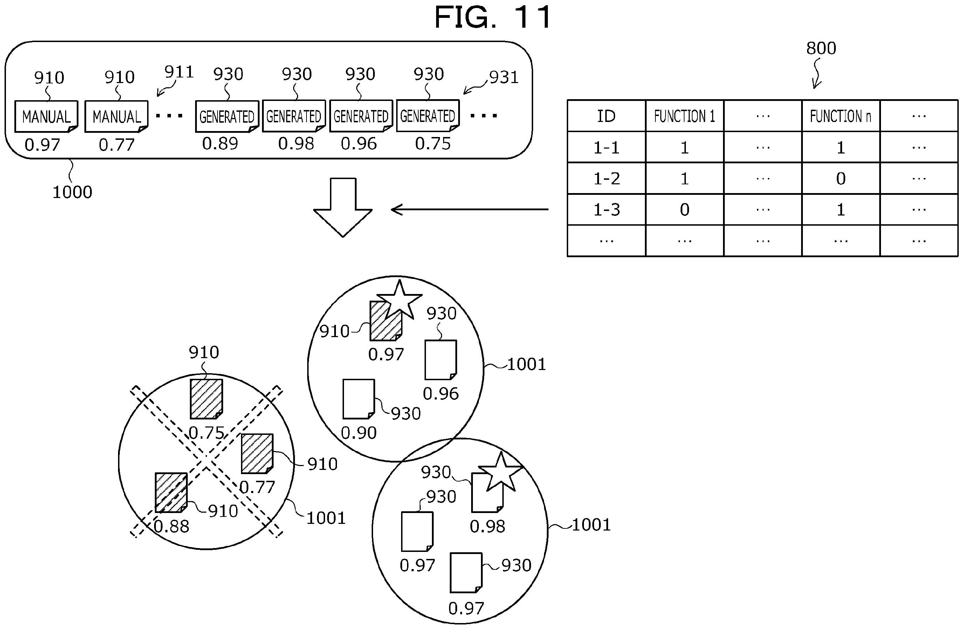

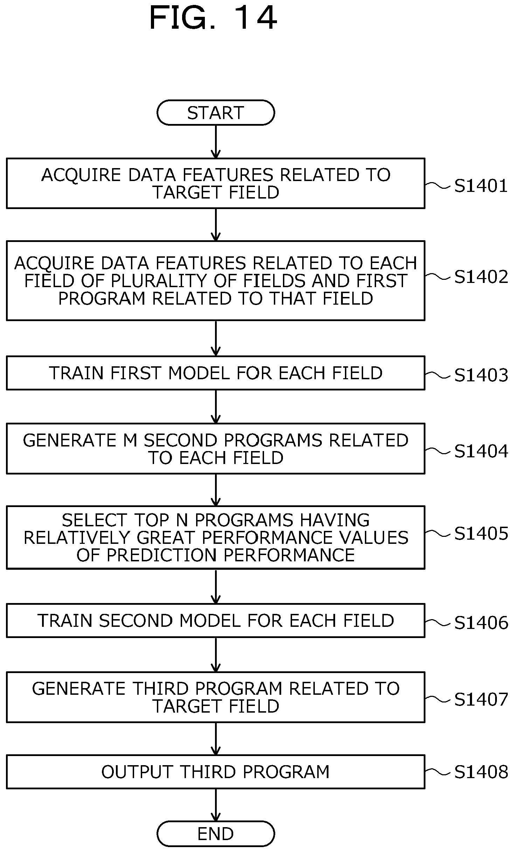

One example of the selection processing will be described later with reference to FIGs. 10 and 11, for example. One example of a selection processing procedure will be described later with reference to FIG. 14, for example. With this configuration, the information processing device 100 may select sample programs suitable for training a second model 940. The second model 940 has a function of generating of a program capable of analyzing data to be analyzed related to a target field according to data features related to the target field. Thus, the information processing device 100 may facilitate training of the second model 940 capable of generating the program capable of accurately analyzing the data to be analyzed related to the target field.

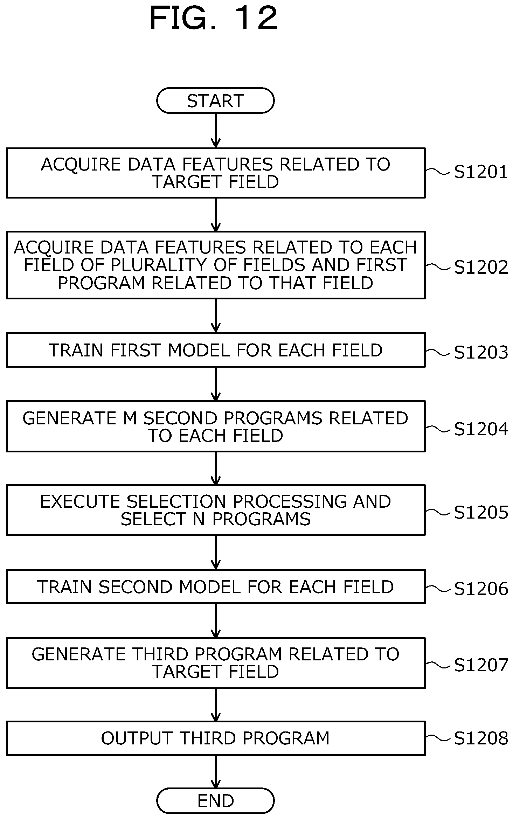

(9-4) The information processing device 100 trains the second model 940 on the basis of the selected programs. The information processing device 100 trains the second model 940 on the basis of the selected programs by, for example, AutoML. With this configuration, the information processing device 100 may train the second model 940 capable of generating the program capable of accurately analyzing the data to be analyzed related to the target field. One example of an overall processing procedure executed by the information processing device 100 illustrated in FIG. 9 will be described later with reference to FIG. 12, for example.

### (One Example of Selection Processing)

Next, one example of the selection processing will be described with reference to FIG. 10.

FIG. 10 is an explanatory diagram illustrating the one example of the selection processing. In FIG. 10, the information processing device 100 selects at least any one program from a program group 1000 corresponding to the data features of the record 900-1. The program group 1000 includes, for example, the first program group 911 corresponding to the data features of the record 900-1 and the second program group 931 corresponding to the data features of the record 900-1.

The information processing device 100 classifies the program group 1000 into a plurality of clusters 1001 with reference to, for example, the feature management table 800. The information processing device 100 selects, for example, a predetermined number of programs in descending order of performance values from each cluster 1001 of the plurality of clusters 1001 with reference to the performance value management table 700. In the example of FIG. 10, the predetermined number is 1. Thus, the information processing device 100 selects, for example, a program having the greatest performance value from each cluster 1001 of the plurality of clusters 1001. In the example of FIG. 10, for example, the selected first programs 910 and the selected second program 930 are indicated by adding star marks.

With this configuration, the information processing device 100 may select the plurality of programs having relatively great performance values and contents different from each other, which is suitable for training the second model 940. Thus, the information processing device 100 may enable training of the second model 940 capable of generating the new program capable of accurately analyzing the data to be analyzed related to the target field.

### (Another Example of Selection Processing)

Next, another example of the selection processing will be described with reference to FIG. 11.

FIG. 11 is an explanatory diagram illustrating the another example of the selection processing. In FIG. 11, the information processing device 100 selects at least any one program from the program group 1000 corresponding to the data features of the record 900-1. The program group 1000 includes, for example, the first program group 911 corresponding to the data features of the record 900-1 and the second program group 931 corresponding to the data features of the record 900-1.

The information processing device 100 classifies the program group 1000 into the plurality of clusters 1001 with reference to, for example, the feature management table 800. The information processing device 100 selects, for example, a predetermined number of the clusters 1001 in which programs having relatively great performance values among the plurality of clusters 1001 with reference to the performance value management table 700.

In the example of FIG. 11, the predetermined number is 2. The information processing device 100 calculates, for example, a statistical value of a performance value of a program included in each cluster 1001 of the plurality of clusters 1001. The statistical value is, for example, a maximum value, a minimum value, an average value, a mode, or a median. The information processing device 100 selects, for example, two clusters 1001 in descending order of the calculated statistical values from the plurality of clusters 1001. In the example of FIG. 11, for example, the cluster 1001 not selected is indicated by adding a cross mark.

The information processing device 100 selects, for example, a predetermined number of programs in descending order of performance values from each cluster 1001 of the predetermined number of selected clusters 1001 with reference to the performance value management table 700. In the example of FIG. 11, the predetermined number is 1. Thus, the information processing device 100 selects, for example, a program having the greatest performance value from each cluster 1001 of the predetermined number of clusters 1001. In the example of FIG. 11, for example, the selected first program 910 and the selected second program 930 are indicated by adding star marks.

With this configuration, the information processing device 100 may select the plurality of programs having relatively great performance values and contents different from each other, which is suitable for training the second model 940. Thus, the information processing device 100 may enable training of the second model 940 capable of generating the new program capable of accurately analyzing the data to be analyzed related to the target field. Furthermore, the information processing device 100 may exclude, from a processing target, a cluster in which programs with relatively small performance values are classified and which is determined to have a high probability that a program suitable for training the second model 940 is not included. Thus, the selection unit 504 may facilitate selection of the programs suitable for training the second model 940.

Here, the case has been described where the information processing device 100 classifies the program group 1000 into the plurality of clusters 1001, but the present embodiment is not limited to this. For example, there may be a case where the information processing device 100 selects at least any one program from the program group 1000 without classifying the program group 1000 into the plurality of clusters 1001. In this case, the information processing device 100 may select, for example, a predetermined number of programs in descending order of performance values from the program group 1000. One example of the overall processing procedure executed by the information processing device 100 in this case will be described later with reference to FIG. 14, for example.

With this configuration, the information processing device 100 may select a plurality of programs having relatively great performance values, which is suitable for training the second model 940. Furthermore, the information processing device 100 may include the first programs 910 and the second programs 930 in the program group 1000. Thus, the information processing device 100 may improve a probability that a plurality of programs having contents different from each other is selected. Thus, the information processing device 100 may facilitate training of the second model 940 capable of generating the new program capable of accurately analyzing the data to be analyzed related to the target field.

### (First Overall Processing Procedure)

Next, one example of a first overall processing procedure executed by the information processing device 100 will be described with reference to FIG. 12. First overall processing is implemented by, for example, the CPU 401, the storage area such as the memory 402 or the recording medium 405, and the network I/F 403 illustrated in FIG. 4.

FIG. 12 is a flowchart illustrating the one example of the first overall processing procedure. In FIG. 12, the information processing device 100 acquires data features related to a target field (Step S1201).

Next, the information processing device 100 acquires data features related to each field of a plurality of fields and a first program related to the field (Step S1202). Then, the information processing device 100 trains a first model on the basis of the acquired first program (Step S1203).

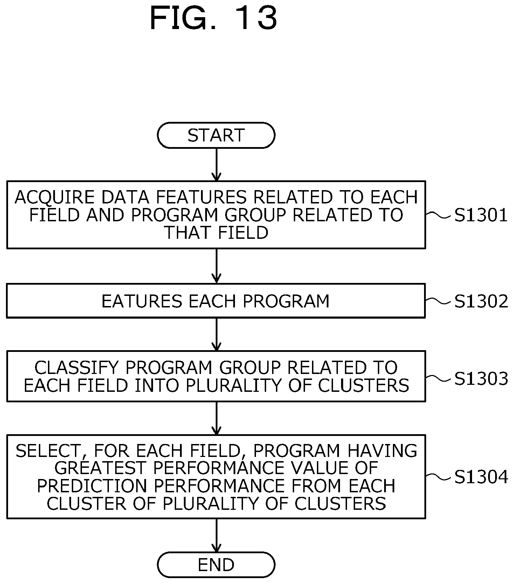

Next, the information processing device 100 generates M second programs related to the field by using the trained first model on the basis of the acquired data features related to each field (Step S1204). Then, the information processing device 100 executes selection processing described later in FIG. 13, and selects N programs from the acquired first program and the generated second programs for each field (Step S1205).

Next, the information processing device 100 trains a second model for each field on the basis of the selected N programs (Step S1206). Then, the information processing device 100 generates a third program related to the target field by using the second model on the basis of the acquired data features related to the target field (Step S1207).

Next, the information processing device 100 outputs the third program (Step S1208). Then, the information processing device 100 ends the first overall processing. With this configuration, the information processing device 100 may enable use of the third program capable of accurately analyzing data to be analyzed related to the target field.

### (Selection Processing Procedure)

Next, one example of the selection processing procedure executed by the information processing device 100 will be described with reference to FIG. 13. The selection processing is implemented by, for example, the CPU 401, the storage area such as the memory 402 or the recording media 405, and the network I/F 403 illustrated in FIG. 4.

FIG. 13 is a flowchart illustrating the one example of the selection processing procedure. In FIG. 13, the information processing device 100 acquires data features related to each field and a program group related to the field including a first program related to the field and a second program related to the field (Step S1301).

Next, the information processing device 100 extracts, for each field, features representing contents of each program of the program group related to the field (Step S1302). Then, the information processing device 100 classifies, for each field, the program group related to the field into a plurality of clusters on the basis of the features representing the contents of each program of the program group related to the field (Step S1303).

Next, the information processing device 100 selects, for each field, a program having the greatest performance value of prediction performance from each cluster of the plurality of clusters (Step S1304). Here, the information processing device 100 may select, for each field, a predetermined number of clusters among the plurality of clusters, and then select the program having the greatest performance value of the prediction performance from each cluster of the predetermined number of selected clusters. Then, the information processing device 100 ends the selection processing. With this configuration, the information processing device 100 may select programs suitable for training the second model.

### (Second Overall Processing Procedure)

Next, one example of a second overall processing procedure executed by the information processing device 100 will be described with reference to FIG. 14. Second overall processing is implemented by, for example, the CPU 401, the storage area such as the memory 402 or the recording medium 405, and the network I/F 403 illustrated in FIG. 4.

FIG. 14 is a flowchart illustrating the one example of the second overall processing procedure. In FIG. 14, the information processing device 100 acquires data features related to a target field (Step S1401).

Next, the information processing device 100 acquires data features related to each field of a plurality of fields and a first program related to the field (Step S1402). Then, the information processing device 100 trains a first model on the basis of the acquired first program (Step S1403).

Next, the information processing device 100 generates M second programs related to the field by using the trained first model on the basis of the acquired data features related to each field (Step S1404). Then, the information processing device 100 selects top N programs having relatively great performance values of prediction performance from the acquired first program and the generated second programs for each field (Step S1405).

Next, the information processing device 100 trains a second model for each field on the basis of the selected N programs (Step S1406). Then, the information processing device 100 generates a third program related to the target field by using the second model on the basis of the acquired data features related to the target field (Step S1407).

Next, the information processing device 100 outputs the third program (Step S1408). Then, the information processing device 100 ends the second overall processing. With this configuration, the information processing device 100 may enable use of the third program capable of accurately analyzing data to be analyzed related to the target field.

Here, the information processing device 100 may switch some steps in each of the flowcharts in FIGs. 12 to 14 in the processing order and execute the processing. For example, the processing in Step S1201 and the processing in Step S1202 may be switched in the order.

As described above, according to the information processing device 100, it is possible to acquire features representing contents of each program of a program group related to a first field. According to the information processing device 100, it is possible to acquire a performance value representing performance of each program. According to the information processing device 100, it is possible to classify the program group into a plurality of clusters on the basis of the acquired features. According to the information processing device 100, it is possible to select a predetermined number of programs having relatively great acquired performance values from each cluster of the plurality of clusters. According to the information processing device 100, it is possible to output the predetermined number of selected programs. With this configuration, the information processing device 100 may output programs suitable for training the second model capable of generating a program capable of analyzing data to be analyzed related to a target field.

According to the information processing device 100, it is possible to acquire features representing contents of each program of a program group related to each field of a plurality of fields different from each other. According to the information processing device 100, it is possible to acquire a performance value representing performance of each program of the program group related to each field. With this configuration, the information processing device 100 may output a plurality of programs having contents different from each other, which is suitable for training a second model capable of generating the program capable of analyzing the data to be analyzed related to the target field.

According to the information processing device 100, it is possible to acquire a first program related to the first field. According to the information processing device 100, it is possible to train, on the basis of the acquired first program, a first model that enables generation of a new program related to the first field according to data features related to the first field. According to the information processing device 100, it is possible to generate a second program related to the first field by using the trained first model on the basis of the data features related to the first field. According to the information processing device 100, it is possible to set the acquired first program and the generated second program in the program group related to the first field. With this configuration, the information processing device 100 may facilitate selection of the plurality of programs having the contents different from each other, which is suitable for training the second model capable of generating the program capable of analyzing the data to be analyzed related to the target field.

According to the information processing device 100, it is possible to train the second model on the basis of the predetermined number of selected programs. The second model may generate the program capable of analyzing the data to be analyzed related to the target field according to data features related to the target field. With this configuration, the information processing device 100 may enable use of the second model capable of generating the programs capable of accurately analyzing the data to be analyzed related to the target field.

According to the information processing device 100, it is possible to specify a predetermined number of clusters in which programs having relatively great acquired performance values are classified among the plurality of clusters. According to the information processing device 100, it is possible to select a predetermined number of programs having relatively great acquired performance values from each cluster of the specified predetermined number of clusters. With this configuration, the information processing device 100 may exclude, from a processing target, a cluster in which programs with relatively small performance values are classified and which is determined to have a high probability that a program suitable for training the second model is not included. Thus, the information processing device 100 may facilitate selection of the programs suitable for training the second model.

According to the information processing device 100, it is possible to select a predetermined number of programs whose acquired performance values are relatively great and equal to or greater than a first threshold. With this configuration, the information processing device 100 may dispense with the need to select a program whose performance value is less than the first threshold and whose probability of becoming a program suitable for training the second model is determined to be low. Thus, the selection unit 504 may facilitate selection of a program suitable for training the second model.

According to the information processing device 100, it is possible to acquire a first program related to the first field. According to the information processing device 100, it is possible to train, on the basis of the acquired first program, a first model that enables generation of a new program related to the first field according to data features related to the first field. According to the information processing device 100, it is possible to generate a second program related to the first field by using the trained first model on the basis of the data features related to the first field. According to the information processing device 100, it is possible to acquire a performance value representing performance of each program of a program group including the acquired first program and the generated second program. According to the information processing device 100, it is possible to select a predetermined number of programs having relatively great acquired performance values from the program group. According to the information processing device 100, it is possible to output the predetermined number of selected programs. With this configuration, the information processing device 100 may output the programs suitable for training the second model capable of generating the program capable of analyzing the data to be analyzed related to the target field.

Note that the information processing method described in the present embodiment may be implemented by executing a program prepared in advance, on a computer such as a PC or a workstation. The information processing program described in the present embodiment is executed by being recorded on a computer-readable recording medium and being read from the recording medium by the computer. The recording medium is a hard disk, a flexible disk, a compact disc (CD)-ROM, a magnetooptical disc (MO), a digital versatile disc (DVD), or the like. Furthermore, the information processing program described in the present embodiment may be distributed via a network such as the Internet.

## Claims

1. An information processing program comprising instructions which, when executed by a computer, cause the computer to execute processing, the processing comprising:
acquiring features that represents contents of each of programs of a program group related to a certain field;
acquiring a performance value that represents performance of each of the programs;
classifying the program group into a plurality of clusters on the basis of the acquired features;
selecting, from each cluster of the plurality of clusters, one or more of programs that have relatively great acquired performance values; and
outputting the one or more of selected programs.

2. The information processing program according to claim 1, wherein
the acquiring of the features includes featuring that represent contents of each of programs of a program group related to each field of a plurality of fields different from each other is acquired, and
the acquiring of the performance value includes acquiring a performance value that represents performance of each of the programs of the program group related to each of the fields.

3. The information processing program according to claim 1 or 2, the processing further comprising:
acquiring a first program related to the field;
training, on the basis of the acquired first program, a first model that enables generation of a new program related to the field according to data features related to the field;
generating a second program related to the field by using the trained first model on the basis of the data features related to the field; and
setting the acquired first program and the generated second program in the program group related to the field.

4. The information processing program according to any one of claims 1 to 3, the processing further comprising:
training, on the basis of the predetermined number of selected programs, a second model that enables generation of a program related to a target field according to data features related to the target field.

5. The information processing program according to any one of claims 1 to 4, the processing further comprising:
specifying a predetermined number of clusters in which programs that have relatively great acquired performance values are classified among the plurality of clusters,
wherein, in the processing of selecting,
a predetermined number of programs that have relatively great acquired performance values are selected from each cluster of the specified predetermined number of clusters.

6. The information processing program according to any one of claims 1 to 5, wherein
the selecting includes selecting a predetermined number of programs whose acquired performance values are relatively great and equal to or greater than a first threshold.

7. A information processing method implemented by a computer, the information processing method comprising:
acquiring features that represent contents of each of programs of a program group related to a certain field;
acquiring a performance value that represents performance of each of the programs;
classifying the program group into a plurality of clusters on the basis of the acquired features;
selecting, from each cluster of the plurality of clusters, one or more of programs that have relatively great acquired performance values; and
outputting the one or more of selected programs.

8. An information processing comprising:
a memory; and
a processor coupled to the memory, the processor being configured to perform processing, the processing including:
acquiring features that represent contents of each of programs of a program group related to a certain field;
acquiring a performance value that represents performance of each of the programs;
classifying the program group into a plurality of clusters on the basis of the acquired features;
selecting, from each cluster of the plurality of clusters, one or more of programs that have relatively great acquired performance values; and
outputting the one or more of selected programs.

9. An information processing program comprising instructions which, when executed by a computer, cause the computer to execute processing, the processing comprising:
acquiring a first program related to a certain field;
training, on the basis of the acquired first program, a first model that enables generation of a new program related to the field according to data features related to the field;
generating a second program related to the field by using the trained first model on the basis of the data features related to the field;
acquiring a performance value that represents performance of each of programs of a program group that includes the acquired first program and the generated second program;
selecting, from the program group, one or more of programs that have relatively great acquired performance values; and
outputting the one or more of selected programs.

10. An information processing method implemented by a computer, the information processing method comprising:
acquiring a first program related to a certain field;
training, on the basis of the acquired first program, a first model that enables generation of a new program related to the field according to data features related to the field;
generating a second program related to the field by using the trained first model on the basis of the data features related to the field;
acquiring a performance value that represents performance of each of programs of a program group that includes the acquired first program and the generated second program;
selecting, from the program group, a one or more of programs that have relatively great acquired performance values; and
outputting the one or more of selected programs.

11. An information processing device comprising:
a control unit configured to:
acquire a first program related to a certain field;
train, on the basis of the acquired first program, a first model that enables generation of a new program related to the field according to data features related to the field;
generate a second program related to the field by using the trained first model on the basis of the data features related to the field;
acquire a performance value that represents performance of each of programs of a program group that includes the acquired first program and the generated second program;
select, from the program group, one or more of programs that have relatively great acquired performance values; and
output the one or more of selected programs.
